# EUROPEAN PATENT SPECIFICATION

(11) **EP 3 274 159 B1**
(45) Date of publication and mention of the grant of the patent: **03.07.2019**
(21) Application number: 16711132.7
(22) Date of filing: 21.03.2016
(51) Int. Cl.: B29C 73/02, B29C 73/26, F03D 1/06

(54) **REPAIR OF WIND TURBINE COMPONENTS**
REPARATUR VON WINDTURBINENKOMPONENTEN
RÉPARATION D'ÉLÉMENTS DE TURBINE ÉOLIENNE

(30) Priority: 24.03.2015 GB 201504942
(43) Date of publication of application: 31.01.2018
(73) Proprietor: Vestas Wind Systems A/S, 8200 Aarhus N (DK)
(72) Inventor: SMITH, Jonathan, Burridge Hampshire SO31 1BL (GB); HANCOCK, Mark, Southampton Hampshire SO15 5HN (GB)
(74) Representative: Vestas Patents Department
(86) International application number: PCT/DK2016/050083
(87) International publication number: WO 2016/150445

(56) References cited:
- DK-A1- 201 370 559
- US-A1- 2010 140 217

## Description

### TECHNICAL FIELD

The present invention relates generally to the repair of wind turbine components such as wind turbine blades.

### BACKGROUND

Modern wind turbines generally include a number of components that are formed of composite construction. For example, the blades of modern wind turbines generally comprise an outer shell formed of fibre-reinforced plastic, such as glass-fibre reinforced plastic (GRP).

The blade shells are formed in large moulds. The process generally involves arranging a number of glass-fibre fabric layers in the mould, together with other structural components such as foam panels. These materials are then covered using a vacuum bag and the bag is sealed against the mould to form a mould cavity. A vacuum is applied to the cavity and liquid resin is admitted into the cavity. The resin infuses throughout the various materials. Thereafter, the resin is cured by applying heat and pressure to the mould until the resin hardens. This process is known as vacuum assisted resin transfer moulding (VARTM), but the skilled person will be aware of other methods of manufacturing composite components, such as using pre-preg techniques in which the resin is pre-applied to the fabric layers.

When manufacturing wind turbine components such as the blades, it is important to control the flow of resin through the layup to ensure that the resin infuses completely throughout the structure. This is achieved through careful placement of resin inlet ports and vacuum outlet ports and through the use of flow promoting materials between the various structural components. If resin does not infuse completely throughout the materials, then the resulting structure may include defects in the form of voids. These voids may occur where air pockets within the layup prevent the resin from completely infusing.

Wind turbine blades often also include longitudinal reinforcing structures that extend along the majority of the length of the blade. These reinforcing structures are generally referred to as spar caps. It is known for these spar caps to comprise a plurality of prefabricated strips of fibre reinforced composite material, such as flat pultruded strips of carbon-fibre reinforced plastic (CFRP), which are placed one on top of another to form a stack. The stack may then be bonded to an internal surface of the blade shell or it may be incorporated within the structure of the shell, for example as described in the applicant's PCT patent application WO2013087078A1.

To incorporate the stacks within the structure of the shell, the individual strips (or preformed stacks of strips) are arranged in the mould together with the glass-fibre layers and foam panels. The strips are stacked one on top of another and the entire layup is then subject to VARTM (as described above). When the strips are stacked, small interstitial spaces exist at the interfaces between the flat surfaces of the adjacent strips in the stack. It is important for resin to penetrate into these spaces during the VARTM process so that once the resin is cured it integrates the strips together. Accordingly, the finished blade will include thin layers of cured resin at the interfaces between adjacent strips in the stack.

A common place for voids to develop is between the stacked strips of reinforcing material in the spar cap structures described above. The interstitial space between adjacent strips in the stack is typically around 0.1 to 0.3 millimetres in height. It can therefore be difficult to ensure that resin flows completely through these small interstitial spaces during the manufacturing process. Therefore, voids may develop in the resin-filled spaces between strips of the stack in the finished turbine blade.

Voids may also occur in other parts of a structure, for example below the surface in other regions of a wind turbine blade shell. Aside from voids resulting from the manufacturing process, defects may also develop in the wind turbine components in use during the lifetime of the wind turbine. It may therefore be necessary to repair such defects in the field.

A prior art technique used to repair a subsurface defect such as a void in a wind turbine blade is described by Deak et al. in US2011209347A1. The technique involves drilling a fill or inlet hole from an external surface of the blade into the void. A vent or outlet hole is also drilled into the void through the wind turbine blade surface. Resin is injected through the fill hole until the resin flows out through the vent hole. The presence of resin flowing out through the vent hole indicates that the resin has filled the void and that the repair process is complete. However, a disadvantage of this technique is that air lock offs can develop within the void which may prevent the resin from completely filling the void resulting in an imperfect repair. DK201370559 describes a method of repairing a wind turbine component according to the preamble of claim 1, whereby resin is administered into a void under a negative pressure. US2010/140217 describes a method for repairing a damaged area of a composite fibre component of an aircraft.

Extensive trials have shown that in some instances drilled holes can initiate cracks in the wind turbine component following the repair. This problem is particularly acute when the prior art repair techniques are used to repair sub-surface voids in spar cap regions of a wind turbine blade, which comprise a stack of pultruded CFRP strips as described above. In such cases, the drilled holes can initiate cracks that tend to propagate parallel to the longitudinal reinforcing fibres of the pultruded CFRP strips along a significant length of the spar caps. The presence of such cracks would render the entire blade unusable, and accordingly there is a need for an improved repair technique suitable for repairing these subsurface defects, and which prevents cracks from forming.

### SUMMARY OF INVENTION

According to an aspect of the present invention, there is provided a method of repairing a defect in a composite wind turbine component, the defect comprising a void located beneath a surface of the component, and the method comprising: forming an inlet passage extending between the surface of the component and the void, the inlet passage defining an inlet at the surface; forming an outlet passage extending between the surface of the component and the void, the outlet passage defining an outlet at the surface; administering resin through the inlet; and causing the resin to flow from the inlet towards the outlet such that the resin substantially fills the void. The inlet and outlet passages are each formed as a respective groove that extends longitudinally between first and second ends defined at the surface of the component, each groove having a first end portion and a second end portion defining the first and second ends respectively, and an intermediate portion located between the first and second end portions and extending into the void. The first and second end portions of the respective grooves are chamfered such that the end portions have a depth relative to the surface of the component that increases progressively moving along the groove from the first and second ends towards the intermediate portion.

This aspect of the invention provides the advantage that subsurface defects can be repaired without causing the failures that are associated with the drilling of holes in the prior art techniques. The chamfering of the end portions of the grooves prevents cracks from forming as a result of the repair process by distributing stress over the length of the end portions of the grooves.

The component may comprise unidirectional fibres. The method may comprise forming the grooves such that the grooves extend substantially parallel to the fibres. This results in relatively few reinforcing fibres being severed when the grooves are formed, so the grooves do not substantially affect the overall structural integrity of the component. In such cases, the method preferably comprises causing the resin to flow from the inlet to the outlet in a direction substantially perpendicular to the fibres. This advantageously allows the resin to infuse across the pultrusion rather than in a spanwise direction along the pultrusion, as is the case with the prior art techniques.

The intermediate portions of the respective grooves preferably extend longitudinally through the void. In preferred embodiments, the intermediate portions of the respective grooves have a longitudinal extent substantially equal to or greater than the longitudinal extent of the void in a direction parallel to the grooves. This prevents air lock offs developing during the repair process and increases the likelihood of a complete repair of the defect. However, in other embodiments the intermediate portion of the groove may not extend longitudinally but may instead comprise an interface or junction between the respective end portions of the groove. In such cases, the intermediate portion may comprise an apex or inflection point of the groove.

The intermediate portions of the respective grooves may have a substantially constant depth relative to the surface of the component. Preferably, the depth of the intermediate portions of the respective grooves substantially corresponds to the depth of the void beneath the surface of the component. This minimises the amount of material that is removed from the component when the grooves are formed, in comparison to a groove that extends deeper than the void.

The first and second ends of the respective grooves are preferably longitudinally displaced from the void. Preferably, the first and second ends of the respective grooves may be longitudinally displaced from the void by a distance of between approximately 25 centimetres to 20 metres, although distances in the range of approximately 0.5 - 10 metres are preferred. However, longer or shorter grooves may be appropriate in some cases.

The first and/or second end portions of the or each groove preferably have a chamfer length to depth aspect ratio greater than 50:1. More preferably, the first and/or second end portions of the or each groove have a chamfer length to depth aspect ratio between approximately 50:1 and 200:1. A chamfer ratio in this range results in chamfered end portions of a suitable length but that also does not cause high stress concentrations and so prevents cracks from forming. It will be appreciated that the length of the end portions is constrained by the length of the component in which the groove is formed.

The void may be located at a depth beneath the surface of the component of between approximately 5 - 100 millimetres, and in such cases the first and/or second chamfered end portions of the or each groove may have a length substantially parallel to the surface of the component in the range of between approximately 25 centimetres - 20 metres, based upon the above preferred chamfer ratios.

The component may comprise a plurality of prefabricated layers arranged in a stack and the void may be located at an interface between adjacent layers in the stack. For example, the prefabricated layers may be pultruded strips of fibre-reinforced plastic e.g. CFRP, which may form a spar cap region of a wind turbine blade.

The method may comprise forming the grooves such that the intermediate portions of the respective grooves are located at a depth substantially corresponding to the depth of the interface between the two layers of the stack that are furthest from the surface of the component. This advantageously allows defects to be repaired without having to determine the depth of the void or the number of voids present. This is particularly useful if the selected detection technique does not provide such information.

The method may comprise forming the grooves by removing material from the component. In such embodiments, the grooves may be formed by moving a cutting tool comprising a cutting device longitudinally over the surface of the component and varying the depth of the cutting device relative to the surface of the component as the cutting tool is moved longitudinally to form the chamfered first and second end portions of the respective grooves. In such cases, the cutting tool may be a rail cutter and the method may further comprise clamping a body of the rail cutter to the surface of the component by means of suction as the rail cutter is moved longitudinally. This allows the grooves to be formed relatively easily.

Preferably, the method further comprises applying negative pressure to the outlet to facilitate the flow of resin from the inlet towards the outlet. Applying negative pressure prevents air lock offs from developing within the void during the repair process and ensures that the repair of the defect is complete.

After the resin has been administered through the inlet, the method optionally comprises inserting a plug into one or more of the grooves, the plug having dimensions corresponding substantially to the dimensions of the groove. The plug may advantageously be a pre-cured composite structure comprising reinforcing fibres. The plugs advantageously replace the material that is removed from the component to form the grooves, preserving the structural integrity of the component. This step may be particularly advantageous if very large grooves are formed.

The method may further comprise forming a plurality of inlet channels and/or a plurality of outlet channels each in the form of grooves. This allows resin to be administered to the groove more quickly and may shorten the time taken to complete the repair method.

The component may be a wind turbine blade shell. In other embodiments, the component may be a spar structure of a wind turbine blade shell. The repair method may of course be used to repair subsurface defects in other components.

### BRIEF DESCRIPTION OF THE DRAWINGS

Examples of the invention will now be described in further detail with reference to the following figures, in which:
Figure 1 is a perspective view of a wind turbine blade;
Figure 2 is a perspective view of a spar cap region of the wind turbine blade of Figure 1, indicated generally by the dashed region in Figure 1;
Figures 3a and 3b are transverse cross-sections of the spar cap region of Figure 2, taken along the line A-A in Figure 2, in which Figure 3a shows a single void and Figure 3b shows a multi-level void;
Figure 4 is a perspective view of the spar cap region of Figure 2, with grooves formed in the blade shell in accordance with the method of the invention;
Figure 5 is a longitudinal cross-section of the spar cap region of Figure 4 taken along the line B-B in Figure 4, and showing a rail cutter which is used to form the grooves;
Figures 6a and 6b are longitudinal cross-sections of the spar cap region of Figure 4, taken along the line B-B in Figure 4, illustrating features of the grooves in more detail;
Figure 7 is a transverse cross-section of the spar cap region of Figure 4, taken along the line C-C in Figure 4, illustrating details of the process of administering resin to repair the void; and
Figure 8 is a perspective view of the spar cap region of Figure 4, showing a pair of plugs being inserted into the groove in accordance with an optional step of the method.

### DETAILED DESCRIPTION

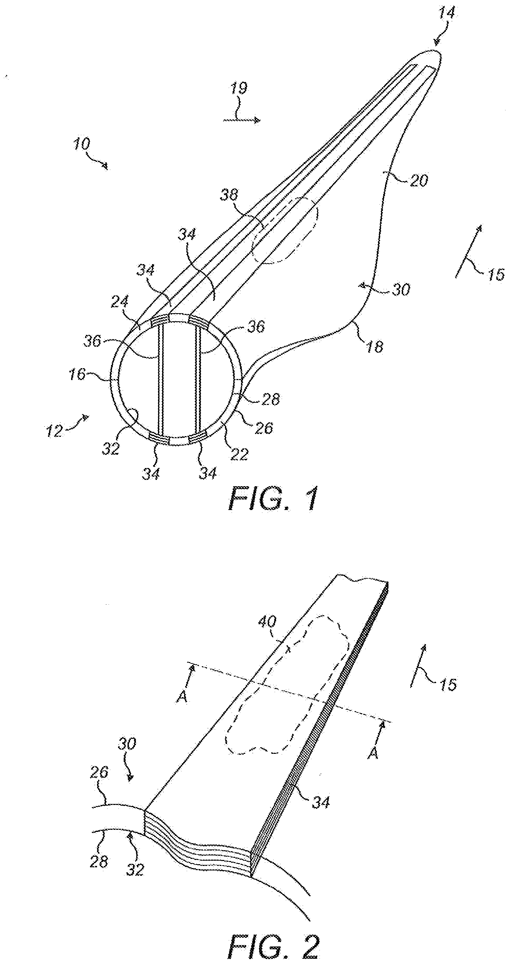

Referring initially to Figure 1, this shows a perspective view of a wind turbine blade 10 of generally hollow construction. The blade 10 extends longitudinally in a 'spanwise' direction between a root end 12 and a tip end 14, as represented by the arrow 15 and transversely in a 'chordwise' direction between a leading edge 16 and a trailing edge 18, as represented by the arrow 19. The blade 10 comprises a shell 20 formed from two opposing half-shells, a windward shell 22 and a leeward shell 24, which are joined together at the leading and trailing edges 16, 18 of the blade 10. Each half shell 22, 24 comprises an outer skin 26 and an inner skin 28, both formed from glass-fibre reinforced plastic (GRP). The outer skin 26 defines an outer surface 30 of the blade 10 and the inner skin 28 defines an inner surface 32 of the blade 10.

As described by way of introduction, the blade 10 includes reinforcing spar caps 34 incorporated within the structure of the shell 20, between the inner and outer skins 28, 26. The spar caps 34 extend longitudinally along the majority of the length of the shell 20, between the root and tip ends 12, 14 of the blade 10. For illustrative purposes, the outer skin 26 in Figure 1 is shown as transparent so that the longitudinal extent of the spar caps 34 can be seen. In practice the spar caps 34 would be substantially obscured by the outer skin 26 of the blade shell 20.

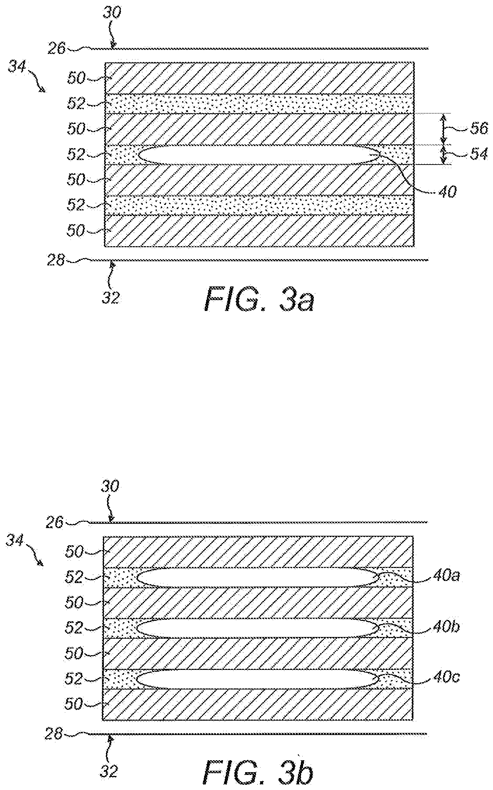

Each spar cap 34 comprises a plurality of prefabricated layers arranged in a stack. The prefabricated layers in this example are in the form of pultruded strips of unidirectional carbon-fibre reinforced plastic (CFRP), and are shown more clearly in Figures 3a and 3b. Each of the pultruded strips therefore comprises reinforcing carbon fibres that are mutually aligned and extend along the length of the strips, i.e. in the spanwise direction 15 of the blade 10.

The blade 10 further comprises two shear webs 36 that are located inside the blade 10 and are connected between opposing pairs of spar caps 34.

Once the blade 10 has been manufactured, it is examined to determine whether any defects are present. A range of non-destructive testing methods may be used to inspect the structural integrity of the blade 10, for example tap-testing or shearography. Other non-destructive testing methods will be readily apparent to persons skilled in the art. Non-destructive testing techniques may also be used in the field to detect defects that may develop in use during the lifetime of the blade 10.

As described by way of background, defects may occur in the spar cap regions of the blade shell 20, between the stacked pultruded strips forming the spar caps 34, as will now be explained further with reference to Figure 2, which shows a schematic perspective view of a spar cap region of the blade shell 20 indicated generally by the dashed area 38 in Figure 1.

Referring to Figure 2, this shows a defect in the form of a void 40 located beneath the outer surface 30 of the blade shell 20 in the spar cap region of the blade 10. For illustrative purposes, the outer skin 26 and the stacked pultruded strips are shown as transparent in Figure 2 so that the void 40 can be seen. The void 40 results from incomplete penetration of resin between the stacked strips of the spar cap 34 during the VARTM process.

Referring now to Figure 3a, this shows a transverse cross-section of the spar cap region of the blade shell 20 taken through the void 40 along the line A-A in Figure 2. As shown in Figure 2, the spar cap 34 comprises a stack of pultruded CFRP strips 50 arranged between the inner and outer skins 28, 26 of the blade shell 20. In this particular example, the spar cap 34 comprises four strips 50, but in other examples the spar cap 34 may comprise more or fewer strips 50 according to the particular structural requirements of the blade 10.

As described by way of introduction, the strips 50 are integrated together in the stack by layers of cured resin 52 at the interfaces between adjacent strips 50 in the stack. For illustrative purposes, the height/thickness 54 of these resin layers 52 is significantly exaggerated in Figure 3a. In practice, each pultruded strip 50 has a thickness 56 of approximately 5 mm and each resin layer 52 between the strips 50 has a thickness 54 of approximately 0.1 - 0.3 mm.

As shown in Figure 3a, the void 40 is located in the resin layer 52 between the two intermediate strips 50 in the stack. Accordingly, in this example, the depth of the void 40 beneath the outer skin 26 of the blade 10 is approximately 10.1 - 10.6 mm, i.e. corresponding to the aggregate thickness of the strips 50 and resin layer 52 above the void 40, as illustrated in Figure 3a.

Figure 3b also shows a transverse cross-section of the spar cap region taken along the line A-A shown in Figure 2. However, in this example, the spar comprises a multi-layer void. Specifically, there are three voids 40a, 40b, 40c in total located respectively in each of the resin layers 52 of the spar cap 34. In this example, the deepest void 40c is located at a depth of approximately 15.2 - 15.9 mm beneath the outer skin 26 of the blade 10, i.e. corresponding to the aggregate thickness of the strips 50 and resin layers 52 above the void 40c.

The longitudinal extent of the voids 40 in the above examples may be any length up to the full length of the spar cap 34. The skilled person will appreciate that wind turbine blade shells currently in production are known to be in excess of 80 metres long.

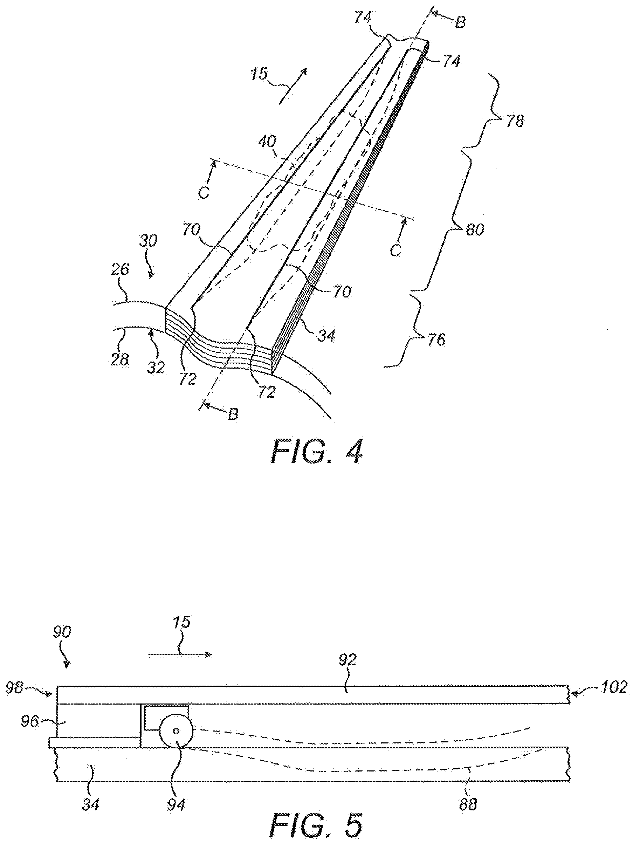

A method of repairing these voids 40 in accordance with the present invention will now be described with reference to Figures 4 to 8.

Referring to Figure 4, this shows a longitudinal perspective view of the spar cap region similar to Figure 2. However, Figure 4 also shows a pair of longitudinal grooves 70, which are formed by cutting material out of the surface of the blade shell 20 in the vicinity of the void 40. As will be described in further detail later, the grooves 70 each connect with the void 40 to provide access to the void 40 from the exterior of the blade 10. The grooves 70 respectively define an inlet and an outlet passage for resin during the repair process, and in this respect the grooves 70 are an alternative to the drilled holes employed in the prior art repair methods discussed by way of background.

Each groove 70 extends along the blade shell 20 between first ends 72 and second ends 74 defined at the outer surface 30 of the shell 20, and comprises three portions: a first end portion 76 that defines the first end 72 of the groove 70; a second end portion 78 that defines the second end 74 of the groove 70; and an intermediate portion 80, located between the first second end portions 76, 78.

The intermediate portion 80 of each groove 70 extends through the void 40 and has a longitudinal extent that corresponds substantially to the longitudinal extent of the void 40. The ends 72, 74 of the groove 70 are thereby longitudinally displaced from the void 40 at either end of the void 40. In this example, the void 40 has a longitudinal extent of approximately one metre, and hence the longitudinal extent of the intermediate portions 80 of the grooves 70 is also approximately one metre. The end portions 76, 78 of the grooves 70 in this example each have a length of approximately two metres. Accordingly, each groove 70 has an approximate length of five metres, as measured between its respective first end 72 and second end 74 along the outer surface 30 of the blade 10. References to the 'length' of the various parts of the groove are intended to mean the length generally parallel to the surface 30 of the shell 20.

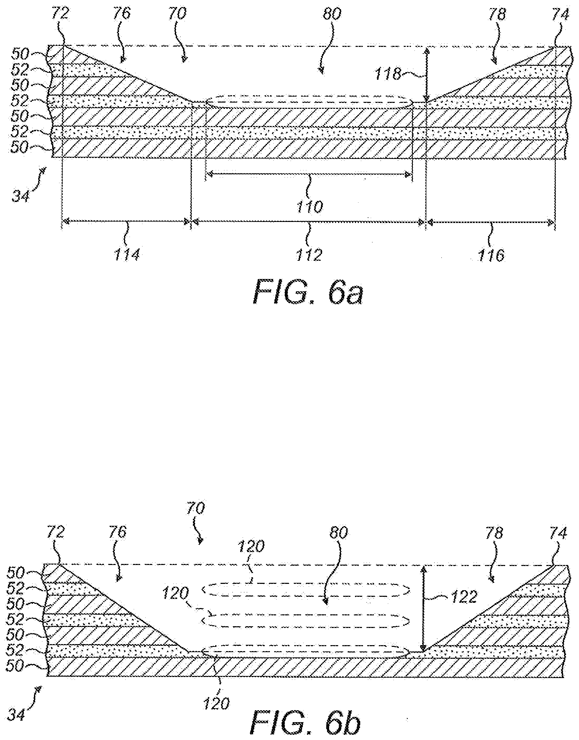

The first and second end portions 76, 78 of each groove 70 are 'tapered' or 'chamfered'. By this we mean that the depth of the end portions 76, 78 relative to the outer surface 30 of the blade shell 20, increases progressively moving along the groove 70 from the first and second ends 72, 74 towards the intermediate portion 80. The form of the chamfering will be described in more detail later, with reference to Figure 6. The intermediate portions 80 of the respective grooves 70 have a substantially constant depth, which corresponds substantially to the depth of the void 40 or, in the case of a multi-level void, to the depth of the deepest void 40c.

Accordingly, the grooves 70 are cut in a spanwise region of the blade 10 that is longer than the longitudinal extent of the groove 70. Moving from the first end 72 of the groove 70 towards the second end 74, the depth of the groove 70 steadily increases (in the first end portion 76) until the void 40 is reached, at which point the depth of the groove 70 is maintained substantially constant (in the intermediate portion 80) as the groove 70 extends through the void 40; thereafter the depth of the groove 70 steadily decreases (in the second end portion 78) towards the second end 74 of the groove 70.

The chamfered end portions 76, 78 of the grooves 70 serve to distribute stress evenly over the length of the end portions 76, 78, and advantageously minimise stress concentrations in the spar cap 34. Since stress concentrations promote the formation of cracks, the chamfered grooves 70 advantageously prevent cracks from forming in the blade shell 20. This is in contrast to the prior art techniques described by way of background, in which the drilled holes result in high local stress concentrations that initiate the formation of cracks.

The grooves 70 are advantageously configured to preserve the strength of the blade shell 20. Therefore, the grooves 70 are suitably narrow in order to minimise the amount of material that is removed from the spar cap regions. In this example the grooves have a width of approximately 3-4 mm, but in other examples the grooves may have a width of up to approximately 1 cm. Additionally, as the grooves 70 extend longitudinally in the spanwise direction 15, they extend substantially parallel to the reinforcing fibres of the stacked pultruded strips 50 forming the spar caps 34. This is advantageous in comparison to, say, transverse grooves, because it results in relatively few reinforcing fibres being severed when the grooves 70 are formed, so the grooves 70 do not substantially affect the overall structural integrity of the spar caps 34.

A method of forming a groove 70 will now be described with reference to Figure 5.

Referring to Figure 5, this shows a longitudinal cross-section of the spar cap 34, taken for example along the line B-B in Figure 4. For ease of illustration, the pultruded strips 50, resin layers 52 and void 40 have been omitted in Figure 4. As shown in Figure 4, the groove 70, (indicated by the dashed line 88) is formed using a cutting device 90, which is moved longitudinally across the outer surface 30 of the blade 10. The cutting device 90 is in the form of a rail cutter and comprises a beam 92 having a motorised circular cutting tool 94 and a vacuum pump 96 mounted at a first end 98 of the beam 92.

To form the groove 70, the cutting device 90 is moved longitudinally over the outer surface 30 of the wind turbine blade shell 20 by means of the beam 92 in the direction of the horizontal arrow 15. The cutting device 90 may be moved automatically or manually, for example by an operator grasping the second end 102 of the beam 92. As the cutting device 90 is moved, the vacuum pump 96 clamps the first end 98 of the device to the surface of the blade 10 by means of suction, and the circular cutting tool 94 rotates to remove material from the blade 10 to form the groove 70. The width of the cutting tool 94 defines the width of the groove 70 formed by the cutting device 90.

The chamfered end portions 76, 78 of the groove 70 are formed by varying the depth of the cutting tool 94 with respect to the outer surface 30 of the blade shell 20 as the cutting device 90 is moved. This is achieved by applying a varying downward force to the second end 102 of the beam 92. For example, to create the chamfered first end portion 76 of the groove 70, the downward force applied to the second end 102 of the beam 92 is steadily increased as the cutting device 90 is moved longitudinally. The intermediate portion 80 of the groove 70 is formed by applying a substantially constant downward force on the second end 102 of the beam 92 as the cutting device 90 is moved longitudinally, whilst the chamfered second end portion 78 of the groove 70 is formed by steadily reducing the downward force applied to the second end 102 of the beam 92 as the cutting device 90 is moved longitudinally. The cutting device 90 may be provided with a guide that controls the cutting depth in order to form a groove 70 with a predetermined depth profile along its length.

Features of the groove 70 will now be described in more detail with reference to Figure 6a, which shows a longitudinal cross-section of the spar cap region, taken along the line B-B in Figure 4. For ease of illustration, the inner and outer skins 28, 26 have been omitted from Figure 6a.

Referring to Figure 6a, it should be appreciated that the relative proportions of the void 40, the spar cap 34 and the various parts of the groove 70 have been modified for ease of illustration. As discussed above, the void 40 in this example has a depth of approximately 10 mm and a length 110 of approximately one metre, whilst the intermediate portion 80 of the groove 70 has a length 112 of approximately one metre, and the first and second chamfered end portions 76, 78 of the groove 70 each have a length 114, 116 of approximately two metres. Accordingly, in reality, the end portions 76, 78 of the groove 70 would be longer and the spar cap 34 would be significantly thinner than illustrated in Figure 6a.

The chamfered end portions 76, 78 of the groove 70 have a chamfer length to depth aspect ratio, otherwise referred to as the 'chamfer gradient' or 'chamfer ratio', which is the ratio of the length 114, 116 of the end portion 76, 78 to its maximum depth 118. In this particular example, the chamfer ratio of the first and second end portions 76, 78 is approximately 200:1.

In this example, the chamfer ratio of the second end portion 78 is the same as the chamfer ratio of the first end portion 76. The skilled person will appreciate, however, that the respective chamfer ratios of the first and second end portions 76, 78 need not necessarily be the same. In other examples, the chamfer ratios of the end portions 76, 78 may take any suitable value. Generally speaking, a larger chamfer ratio results in lower stress concentrations. However, there is a trade-off effect: the larger the chamfer ratio, the longer the groove 70 and the more material must be removed from the reinforcing structure. Additionally, the length of the groove 70 is limited by the length of the wind turbine blade 10. Tests have shown that chamfer ratios between approximately 50:1 - 200:1 provide the best results in practice.

As shown in Figure 6a, the intermediate portion 80 of the groove 70 in this example is substantially the same length as the void 40 and hence extends through the entire length of the void 40 in the longitudinal direction. This is advantageous because it substantially prevents air lock offs developing within the void 40 during the repair process, which may otherwise occur if the intermediate portion 80 was shorter than the void 40. As described previously, air lock offs are undesirable as they can prevent resin from completely filling the void 40 and lead to an incomplete repair. Air lock offs are also conveniently avoided if the intermediate portion 80 is longer than the void 40. However, an intermediate portion 80 of substantially equal length to the void 40 is preferred because it minimises the amount of material that is removed from the blade shell 20 by the formation of the groove 70. In practice, however, it may be beneficial to form the length 112 of the intermediate portion 80 slightly greater than the longitudinal extent 110 of the void 40 to provide a margin for error.

Referring now to Figure 6b, this is similar to Figure 6a but shows the profile of a groove 70 formed to repair the multi-level void shown in Figure 3b. The voids are represented by the dashed-dot lines 120 in Figure 6b. In this example, in order to repair the multi-level voids 40a, 40b, 40c in a single repair operation, a relatively deep groove 70 is formed. In this case, the cutting depth 122 at the intermediate portion 80 of the groove 70 substantially corresponds to the depth of the deepest void 40c, i.e. the void 40c that is furthest away from the outer surface 30 of the blade shell 20.

Depending upon the non-destructive testing technique selected for locating the voids, it may not be possible to determine the depth of a void accurately. For example, shearography may only produce a two-dimensional representation of the void, which would show the length and width of the void but not its depth. Furthermore, depending upon the testing technique, it may not be possible to determine whether there is a single void (such as that shown in Figure 3a) or a multi-level void (such as that shown in Figure 3b). Accordingly, if the depth of the void(s) cannot be determined accurately, then the method may involve forming the groove 70 such that the intermediate portion 80 has a depth substantially corresponding to the maximum possible void depth. This ensures that the groove 70 connects with the void, regardless of its actual depth, and also conveniently allows multi-level voids to be repaired, without needing to determine the number of voids present. Therefore, the method may advantageously comprise forming a relatively deep groove 70, such as the groove 70 shown in Figure 6b as a default.

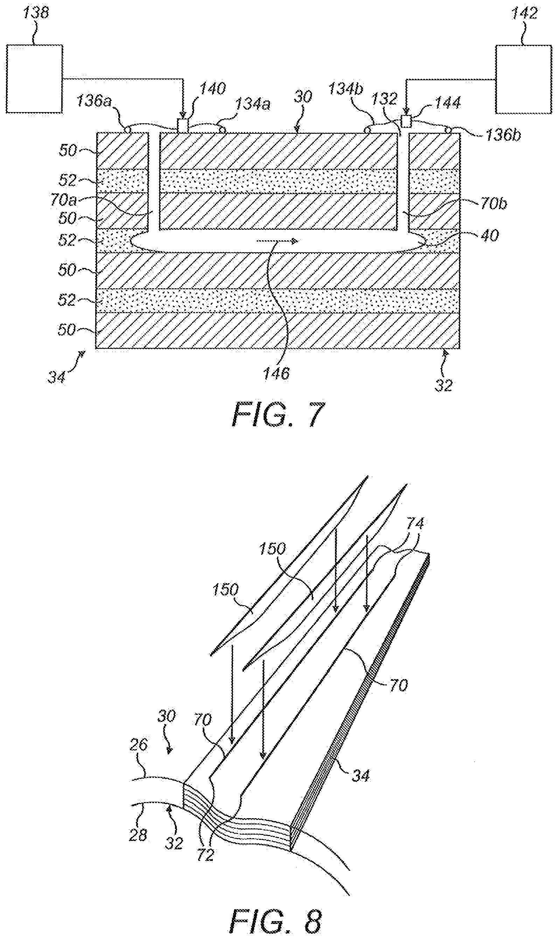

Once the inlet and outlet grooves 70 have been suitably established in the wind turbine blade shell 20, as described above, the defect is repaired by filling the void(s) 40 with resin. The details of this process will now be described with reference to Figure 7, which shows a schematic transverse cross-section of the spar cap 34 taken through the void 40 and grooves 70a, 70b along the line C-C in Figure 4 in the case of a single void 40. It will be appreciated that the following description applies equally to the repair of multi-level voids.

Referring to Figure 7, this shows the two grooves 70a, 70b communicating with the void 40 and providing a fluid path between the exterior of the blade 10 and the void 40. As discussed previously, one of the grooves 70a defines a resin inlet 130 at the outer surface 30 of the blade shell 20 and the other groove 70b defines a resin outlet 132 at the outer surface 30 of the blade shell 20. A first vacuum bag 134a is placed over the inlet groove 70a and sealed against the outer surface 30 of the blade 10 using sealant tape 136a. Similarly, a second vacuum bag 134b is placed over the outlet groove 70b and sealed against the outer surface 30 of the blade 10 using sealant tape 136b. A resin pump 138 is connected to the inlet groove 70a via a resin injection port 140 provided in the first vacuum bag 134a and a vacuum pump 142 is connected to the outlet 132 via a vacuum valve 144 provided in the second vacuum bag 134b.

Once the resin pump 138 and the vacuum pump 142 have been connected to the inlet 130 and outlet 132 respectively, the vacuum pump 142 is switched on to create a negative pressure in the void 40. The resin pump 138 is then turned on to supply resin to the inlet 130 under positive pressure. The resin initially flows longitudinally to fill the inlet groove 70a and then flows transversely from the inlet groove 70a, through the void 40 towards the outlet groove 70b in the chordwise direction as represented by the arrow 146 in Figure 7.

As discussed previously, the fact that the inlet and outlet grooves 70a, 70b extend throughout substantially the entire length of the void 40 advantageously prevents air lock offs from forming within the void 40 during resin infusion and ensures that resin completely fills the void 40. In addition, applying negative pressure to the outlet 132 serves to evacuate the void 40 and further reduces the likelihood of air lock offs occurring in the void 40 during the repair.

Forming the inlet and outlet grooves 70a, 70b such that they extend throughout the entire length of the void 40 also means that there is a large resin gallery available for resin to flow from the inlet passage into the void 40, and from the void 40 into the outlet passage. These large resin galleries advantageously reduce resistance to flow. Supplying the resin to the inlet 130 under positive pressure, whilst not essential provides an advantage in that the positive pressure helps to overcome any remaining resistance to flow that may result from the dimensions of the void 40.

Once the resin has been administered through the inlet 130 to fill the void 40, the area including the repair is subjected to a local cure to harden the resin. The repair is then complete. Non-destructive techniques may be used to verify that the defect has been fully repaired.

A further optional step of the method will now be described with reference to Figure 8.

Referring to Figure 8, once the void 40 has been substantially filled with resin, a pair of plugs 150 may be inserted into the respective grooves 70. The plugs 150 are shaped to correspond to the shape of the grooves 70. The plugs 150 may advantageously be formed from the same or similar material to the spar caps 34, for example they may be made from CFRP. The plugs 150 therefore replace the material that is removed from the spar cap region to form the grooves 70. This step may be particular advantageous if very large grooves 70 are formed so that the structural integrity of the spar cap 34 is not appreciably compromised by the repair technique. If this step is omitted, then the grooves 70 are instead filled with the resin that is admitted during the repair process, which once cured has been found to be satisfactory in most cases.

It will be appreciated that many modifications may be made to the above examples without departing from the scope of the present invention as defined in the accompanying claims. For example, whilst the above examples describe repairing defects located at the interfaces between adjacent reinforcing strips 50 of a spar structure, repair techniques according to the present invention are equally suitable for repairing other subsurface defects in a wind turbine blade or other component. In other embodiments, the method may comprise forming a plurality of inlet passages and/or a plurality of outlet passages, each in the form of grooves. Whilst the inlet and outlet grooves 70 in the above examples are substantially identical, in other embodiments, the grooves 70 may be dissimilar, for example to accommodate a different shaped void or for other reasons.

## Claims

1. A method of repairing a defect in a composite wind turbine component, the defect comprising a void (40) located beneath a surface of the component, and the method comprising:
a. forming an inlet passage extending between the surface (30) of the component and the void (40), the inlet passage defining an inlet (130) at the surface;
b. forming an outlet passage extending between the surface (30) of the component and the void (70), the outlet passage defining an outlet (132) at the surface;
c. administering resin through the inlet; and
d. causing the resin to flow from the inlet (130) towards the outlet (132) such that the resin substantially fills the void (40);
**characterized in that** the inlet and outlet passages are each formed as a respective groove (70) that extends longitudinally between first and second ends (72, 74) defined at the surface (30) of the component, each groove having a first end portion (76) and a second end portion (78) defining the first and second ends respectively, and an intermediate portion (80) located between the first and second end portions and extending into the void (70) ; and
wherein the first and second end portions (76, 78) of the respective grooves (70) are chamfered such that the end portions have a depth relative to the surface (30) of the component that increases progressively moving along the groove from the first and second ends towards the intermediate portion (80).

2. The method of Claim 1, wherein the component comprises unidirectional fibres and the method comprises forming the grooves (70) such that the grooves extend substantially parallel to the fibres.

3. The method of Claim 2, wherein the method further comprises causing the resin to flow from the inlet (130) to the outlet (132) in a direction substantially perpendicular to the fibres.

4. The method of any preceding claim, wherein the intermediate portions (80) of the respective grooves (70) extend longitudinally through the void (40).

5. The method of any preceding claim, wherein the first and/or second end portions (76, 78) of the or each groove (70) have a chamfer length to depth aspect ratio greater than approximately 50:1.

6. The method of any preceding claim, wherein the component comprises a plurality of prefabricated layers (50) arranged in a stack and the void (40) is located at an interface between adjacent layers in the stack.

7. The method of Claim 6, wherein the prefabricated layers (50) comprise fibre-reinforced composite material.

8. The method of any preceding claim, wherein the method comprises forming the grooves (70) by removing material from the component.

9. The method of any preceding claim, wherein the method comprises forming the grooves (70) by moving a cutting tool (90) comprising a cutting device longitudinally over the surface of the component and varying the depth of the cutting device relative to the surface of the component as the cutting tool is moved longitudinally to form the chamfered first and second end portions of the respective grooves.

10. The method of any preceding claim, wherein the method further comprises applying negative pressure to the outlet (132) to facilitate the flow of resin from the inlet towards the outlet.

11. The method of any preceding claim, wherein after the resin has been administered through the inlet (130), the method further comprises inserting a plug (150) into one or more of the grooves (70), the plug having dimensions corresponding substantially to the dimensions of the groove.

12. The method of Claim 11, wherein the plug (150) is a pre-cured composite structure comprising reinforcing fibres.

13. The method of any preceding claim, wherein the method further comprises forming a plurality of inlet channels and/or a plurality of outlet channels each in the form of grooves (70).

14. The method of any preceding claim, wherein the component is a wind turbine blade shell (20).

15. The method of any preceding claim, wherein the component is a spar structure (34) of a wind turbine blade shell (20).

## Patentansprüche

1. Verfahren zum Reparieren eines Defekts in einer Windturbinen-Verbundkomponente, wobei der Defekt einen Hohlraum (40) umfasst, der sich unter einer Oberfläche der Komponente befindet, und wobei das Verfahren umfasst:
a. Bilden eines Einlasskanals, der sich zwischen der Oberfläche (30) der Komponente und dem Hohlraum (40) erstreckt, wobei der Einlasskanal einen Einlass (130) an der Oberfläche definiert;
b. Bilden eines Auslasskanals, der sich zwischen der Oberfläche (30) der Komponente und dem Hohlraum (70) erstreckt, wobei der Auslasskanal einen Auslass (132) an der Oberfläche definiert;
c. Verabreichung von Harz durch den Einlass; und
d. wodurch das Harz vom Einlass (130) so in Richtung Auslass (132) fließt, so dass das Harz den Hohlraum (40) im Wesentlichen ausfüllt;
**dadurch gekennzeichnet, dass**
die Einlass- und Auslasskanäle jeweils als eine entsprechende Rille (70) ausgebildet sind, die sich in Längsrichtung zwischen ersten und zweiten Enden (72, 74) erstreckt, die an der Oberfläche (30) der Komponente definiert sind, wobei jede Rille einen ersten Endabschnitt (76) und einen zweiten Endabschnitt (78) aufweist, die das erste bzw. zweite Ende definieren, und einen Zwischenabschnitt (80), der zwischen dem ersten und zweiten Endabschnitt angeordnet ist und sich in den Hohlraum (70) hinein erstreckt; und
wobei der erste und zweite Endabschnitt (76, 78) der jeweiligen Rillen (70) so angefast sind, dass die Endabschnitte eine Tiefe in Bezug auf die Oberfläche (30) der Komponente aufweisen, die entlang der Rille von dem ersten und zweiten Ende in Richtung des Zwischenabschnitts (80) fortlaufend zunimmt.

2. Verfahren nach Anspruch 1, wobei die Komponente unidirektionale Fasern umfasst und das Verfahren das Bilden der Rillen (70) umfasst, so dass sich die Rillen im Wesentlichen parallel zu den Fasern erstrecken.

3. Verfahren nach Anspruch 2, wobei das Verfahren weiter umfasst, dass das Harz veranlasst wird, vom Einlass (130) zum Auslass (132) in eine Richtung zu fließen, die im Wesentlichen senkrecht zu den Fasern verläuft.

4. Verfahren nach einem der vorstehenden Ansprüche, wobei sich die Zwischenabschnitte (80) der jeweiligen Rillen (70) in Längsrichtung durch den Hohlraum (40) hindurch erstrecken.

5. Verfahren nach einem der vorstehenden Ansprüche, wobei der erste und/oder zweite Endabschnitt (76, 78) der oder jeder Rille (70) ein Fasenlängen-Tiefen/Seitenverhältnis von mehr als etwa 50:1 aufweist.

6. Verfahren nach einem der vorstehenden Ansprüche, wobei die Komponente eine Vielzahl von vorgefertigten Schichten (50) umfasst, die in einem Stapel angeordnet sind, und der Hohlraum (40) an einer Schnittstelle zwischen benachbarten Schichten im Stapel angeordnet ist.

7. Verfahren nach Anspruch 6, wobei die vorgefertigten Schichten (50) faserverstärktes Verbundmaterial umfassen.

8. Verfahren nach einem der vorstehenden Ansprüche, wobei das Verfahren das Bilden der rillen (70) durch Entfernen von Material von der Komponente umfasst.

9. Verfahren nach einem der vorstehenden Ansprüche, wobei das Verfahren das Bilden der Rillen (70) durch Bewegen eines Schneidwerkzeugs (90), das eine Schneidvorrichtung umfasst, in Längsrichtung über die Oberfläche der Komponente und das Variieren der Tiefe der Schneidvorrichtung in Bezug auf die Oberfläche der Komponente umfasst, während das Schneidwerkzeug in Längsrichtung bewegt wird, um den angefasten ersten und zweiten Endabschnitt der jeweiligen Rillen zu bilden.

10. Verfahren nach einem der vorstehenden Ansprüche, wobei das Verfahren weiter das Anwenden von Unterdruck auf den Auslass (132) umfasst, um das Fließen des Harzes vom Einlass zum Auslass zu erleichtern.

11. Verfahren nach einem der vorstehenden Ansprüche, wobei, wobei, nachdem das Harz durch den Einlass (130) verabreicht wurde, das Verfahren weiter das Einsetzen eines Stopfens (150) in eine oder mehrere der Rollen (70) umfasst, wobei der Stopfen Abmessungen aufweist, die im Wesentlichen den Abmessungen der Rille entsprechen.

12. Verfahren nach Anspruch 11, wobei der Stopfen (150) eine vorgehärtete Verbundstruktur ist, die Verstärkungsfasern umfasst.

13. Verfahren nach einem der vorstehenden Ansprüche, wobei das Verfahren weiter das Bilden einer Vielzahl von Einlasskanälen und/oder einer Vielzahl von Auslasskanälen in Form von Rillen (70) umfasst.

14. Verfahren nach einem der vorstehenden Ansprüche, wobei die Komponente eine Windturbine-Blattschale (20) ist.

15. Verfahren nach einem der vorstehenden Ansprüche, wobei die Komponente eine Holmstruktur (34) einer Windturbine-Blattschale (20) ist.

## Revendications

1. Procédé de réparation d'un défaut dans un élément d'éolienne composite, le défaut comprenant un vide (40) situé sous une surface de l'élément, et le procédé comprenant :
a) la formation d'un passage d'entrée s'étendant entre la surface (30) de l'élément et le vide (40), le passage d'entrée définissant une entrée (130) au niveau de la surface ;
b) la formation d'un passage de sortie s'étendant entre la surface (30) de l'élément et le vide (70), le passage de sortie définissant une sortie (132) au niveau de la surface ;
c) l'administration d'une résine par l'entrée ; et
d) le fait d'amener la résine à s'écouler de l'entrée (130) vers la sortie (132) de sorte que la résine remplisse sensiblement le vide (40) ;
**caractérisé en ce que**
les passages d'entrée et de sortie forment chacun une rainure respective (70) qui s'étend longitudinalement entre des première et seconde extrémités (72, 74) définies au niveau de la surface (30) de l'élément, chaque rainure ayant une première partie formant extrémité (76) et une seconde partie formant extrémité (78) définissant les première et seconde extrémités respectivement, et une partie intermédiaire (80) située entre les première et seconde parties formant extrémités et s'étendant jusqu'à l'intérieur du vide (70) ; et
dans lequel les première et seconde parties formant extrémités (76, 78) des rainures respectives (70) sont chanfreinées de sorte que les parties formant extrémités ont une profondeur par rapport à la surface (30) de l'élément qui augmente progressivement en avançant le long de la rainure depuis les première et seconde extrémités vers la partie intermédiaire (80).

2. Procédé selon la revendication 1, dans lequel l'élément comprend des fibres unidirectionnelles et le procédé comprend la formation des rainures (70) de sorte que les rainures s'étendent sensiblement parallèlement aux fibres.

3. Procédé selon la revendication 2, dans lequel le procédé comprend en outre le fait d'amener la résine à s'écouler de l'entrée (130) jusqu'à la sortie (132) dans une direction sensiblement perpendiculaire aux fibres.

4. Procédé selon une quelconque revendication précédente, dans lequel les parties intermédiaires (80) des rainures respectives (70) s'étendent longitudinalement à travers le vide (40).

5. Procédé selon une quelconque revendication précédente, dans lequel les première et/ou seconde parties formant extrémité (76, 78) de la rainure ou de chaque rainure (70) ont un rapport d'aspect de la longueur à la profondeur du chanfrein supérieur à environ 50:1.

6. Procédé selon une quelconque revendication précédente, dans lequel l'élément comprend une pluralité de fibres préfabriquées (50) agencées en une pile et le vide (40) est situé à une jonction entre des couches adjacentes de la pile.

7. Procédé selon la revendication 6, dans lequel les couches préfabriquées (50) comprennent une matière composite renforcée par des fibres.

8. Procédé selon une quelconque revendication précédente, dans lequel le procédé comprend la formation des rainures (70) par enlèvement de matière de l'élément.

9. Procédé selon une quelconque revendication précédente, dans lequel le procédé comprend la formation des rainures (70) par déplacement d'un outil de coupe (90) comprenant un dispositif de coupe longitudinalement sur la surface de l'élément et modification de la profondeur du dispositif de coupe par rapport à la surface de l'élément pendant que l'outil de coupe est déplacé longitudinalement pour former les premières et seconde parties formant extrémités chanfreinées des rainures respectives.

10. Procédé selon une quelconque revendication précédente, dans lequel le procédé comprend en outre l'application d'une pression négative à la sortie (132) pour faciliter l'écoulement de résine de l'entrée vers la sortie.

11. Procédé selon une quelconque revendication précédente, dans lequel après que la résine a été administrée par l'entrée (130), le procédé comprend en outre l'introduction d'un bouchon (150) dans une ou plusieurs des rainures (70), le bouchon ayant des dimensions correspondant sensiblement aux dimensions de la rainure.

12. Procédé selon la revendication 11, dans lequel le bouchon (150) est une structure composite préalablement durcie comprenant des fibres de renfort.

13. Procédé selon une quelconque revendication précédente, dans lequel le procédé comprend en outre la formation d'une pluralité de canaux d'entrée et/ou d'une pluralité de canaux de sortie, chacune sous la forme de rainures (70).

14. Procédé selon une quelconque revendication précédente, dans lequel l'élément est une enveloppe de pale d'éolienne (20).

15. Procédé selon une quelconque revendication précédente, dans lequel l'élément est une structure de longeron (34) d'une enveloppe de pale d'éolienne (20).
